# EUROPEAN PATENT APPLICATION

(11) **EP 1 795 319 A2**
(43) Date of publication of application: **13.06.2007**
(21) Application number: 06256197.2
(22) Date of filing: 05.12.2006
(51) Int. Cl.: B27N 5/00, B27N 3/00

(54) **Method for manufacturing resin composite formed product**

(30) Priority: 07.12.2005 JP 2005353116; 27.12.2005 JP 2005374752; 12.06.2006 JP 2006161838
(71) Applicant: Hasegawa, Katuyuki, Himeji-shi, Hyogo 679-2101 (JP)
(72) Inventor: Hasegawa, Katuyuki, Himeji-shi, Hyogo 679-2101 (JP)
(74) Representative: Stuart, Ian Alexander

(57) **Abstract**

The invention provides a method for manufacturing a resin composite formed product for easily producing a resin composite formed product at a high precision by easy forming. The method is for producing a resin composite formed product (31, 31') with a plate-like or prescribed three-dimensional shape by using a composite material (30, 30' , 30") obtained by bonding a filler-like, powder- like, granular, flaky, or bulky raw material with a binder resin, crushing the composite material, arranging the crushed fragments of the composite material on a plane or a prescribed three-dimensional face, softening or melting the binder resin under pressurizing condition, and curing the binder resin. Wood pieces or a hydrated metal compound may be used as the composite material. A biodegradable resin may be used as the binder resin.

## Description

### BACKGROUND OF THE INVENTION

### 1. Field of the Invention

The invention relates to a method for manufacturing a resin composite formed product, preferably a method for manufacturing at a high precision by easy forming.

### 2. Description of the Related Art

In an automobile, a resin formed product has been used frequently for an interior material, for example, an instrument panel, an arm rest, a door rim or the like. Further, a resin formed product has been used also for an interior material for construction such as a floor plate and a wall material.

An automotive interior material is proposed (Japanese Patent Application Publication (JP-B) No. 03-64308) which is provided with a desired strength and quality feel by forming a vinyl chloride layer mixed with a wood powder in an amount of 20% by weight or less amount on the rear face of a vinyl chloride layer mixed with a wood powder in an amount of 40 to 60% by weight.

Further, an automotive interior material is proposed (Japanese Patent Application Laid-Open (JP-A) No. 60-219049) which comprises a soft resin layer with a certain thickness formed by heating and depositing a vinyl chloride layer on a vinyl chloride layer containing a wood powder mixed with.

Further, a construction interior material is proposed (Japanese Patent No. 3648590) of which a wood powder-resin composite material and a surface decorative material are bonded with an improved adhesion strength by exposing the wood powder by siding the surface of a resin composite material mixed with the wood powder and sticking the surface decorative material with a water-based adhesive.

However, the composite resin material mixed with the wood powder is so weak in the bonding of the wood powder and the resin as to collapse with a low load and therefore it is difficult to form it in a three dimensional shape and a product shape has been often limited to a plate-like shape.

The inventer of this present invention has developed a composite wood material production method and made the material practically usable by heating three dimensional wood pieces in which a plurality of fine voids remain in three directions at right angles to one another and at the same time evaporating water from the wood pieces; melting a binder resin; sufficiently mixing the melted binder resin and a plurality of the wood pieces; successively pressurizing the kneaded mixture of the wood pieces and the binder resin in three direction at right angles to one another or in one direction by a high pressure; curing the binder resin by cooling in a state that the high pressure is being applied or cooling after the high pressure application: and thereby firmly binding the wood pieces and the binder resin (Japanese Patent No. 3680172).

Recently, it has been required to provide non-flammability or hardly flammable property to a resin formed product such as an automotive interior material or a construction interior material (JP-A No. 2000-290474).

Since the wood pieces and the binder resin of the composite wood material described in Patent Document No. 36801724 are firmly bonded, it is made possible to form a product with a complicated three dimensional shape, however the wood pieces appear in the surface of the formed product and therefore it may be possible for the formed product to be inferior in the appearance in accordance with the uses of the formed product.

Accordingly, it is supposed to be better to conceal the existence of wood pieces by using the composite wool material as a base material and forming a resin layer containing no wood piece. In the case no size precision is required, after the composite wood material production, the surface resin layer may be formed continuously and the obtained material is formed into a product shape to give an aimed resin composite formed product.

However, in the case the size precision is required, in relation to the involvement of the steps of kneading the wood pieces and the binder resin and penetrating the fine voids of the wood surface with the binder resin by high pressure application, it is difficult to produce a composite wood material having desired characteristics with a high size precision and the size precision of the resin composite formed product may be not necessarily always guaranteed if the production of the wood composite material and the formation of the surface resin layer are carried out continuously.

Further, with respect to the resin formed product described in Patent Document JP-A No. 2000-290474, the non-flammability or the hardly flammable property is to be provided by adding an inorganic filler, however if the amount of the inorganic filler is increased, although the non-flammability or the hardly flammable property is improved, the viscosity is increased in the case the amount exceeds 50% by weight in the resin formed product and it results in difficult to form a thin plate.

### SUMMARY OF THE INVENTION

A preferred embodiment of the invention provides a method for manufacturing a resin composite formed product with a high precision by easy forming.

A method for manufacturing aresin composite formed product production method according to the present invention is a method for manufacturing a resin composite formed product in a plate-like or prescribed three-dimensional shape by using a composite material obtained by bonding a particulate (e.g. filler-like, powder-like, granular, flaky, or bulky) raw material with a binder resin, crushing the composite material, arranging the crushed fragments of the composite material on a plane or a prescribed three-dimensional face, softening or melting the binder resin under pressurizing condition, and curing the binder resin or otherwise hardening it (e.g. by allowing it to cool).

One characteristic of the invention is that the resin composite formed product in a plate-like or prescribed three-dimensional shape is produced by using a composite material obtained by bonding (e.g.) a filler-like, powder-like, granular, flaky, or bulky raw material with a binder resin, once crushing the composite material, arranging the crushed fragments of the composite material on a plane or a prescribed three-dimensional face, and softening or melting the binder resin under pressurizing condition.

Accordingly, even in the case the viscosity is increased during the production of the composite material to make it difficult to form the composite material into a prescribed shape, if the composite material is crushed, a desired shape can be easily formed. For example, if a raw material for giving non-flammability or a hardly flammable property, e.g., a large quantity of a hydrated metal compound, and a binder resin are kneaded, the viscosity is gradually increased to make it very difficult to form a thin plate. On the other hand, since crushed fragments of a composite material are arranged, heated, and pressurized in the invention, even if the composite material has a high viscosity, a thin plate can be formed easily.

Another characteristic of the invention is that the needed mechanical property is obtained in the production steps of the composite material. For example, in the case of the composite material (including a semi-composite material which is not provided with needed mechanical strength yet but has sufficiently high strength), since the wood pieces and the binder resin are already firmly bonded (or in the case of the semi-composite material, since the wood pieces and the binder resin are bonded with sufficiently high strength), if the crushed pieces are heated for either softening or melting and successively pressurized, a resin composite formed product having a plate-like or three dimensional shape, for example a product shape or a roughly formed shape, can be obtained and in this manner, the resin composite formed product can be produced at a high precision with no need of so high pressurizing pressure. As a result, if a surface resin layer is formed on the surface of the obtained resin composite formed product, the resin composite formed product having good appearance and high size precision can be obtained.

Further, since the crushed pieces of the composite material are pressurized after being softened or melted, the raw material such as wood pieces are not arranged in a specified direction but oriented in every direction and therefore, the mechanical properties such as strength do not become anisotropic.

Further, since the resin composite formed product contains raw materials of the composite material, e.g., large quantities of wood pieces and a hydrated metal compound, a resin formed product can be produced at a low cost as compared with the case of producing a formed product solely from a resin. Further, in the case the resin composite formed product is discarded, the resin composite formed product is collected and crushed to make the crushed fragments usable as a raw material for newly producing a resin composite formed product and thus the resin composite formed product is excellent in recycling.

The raw material for the composite material may be those which have a filler-like, powder, granular, flaky, or bulky shape and are to be bonded with the binder resin for forming the composite material and, for example, wood pieces and a hydrated metal compound can be employed.

Wood pieces are those which have a three dimensional shape in which a plurality of fine voids remain in three directions at right angles to one another, but are not particularly limited in the size. The composite material in this case include those which are obtained by firmly bonding wood pieces and the binder resin by evaporating the contained water from the wood pieces and at the same time penetrating the fine voids in the surface side of the wood pieces with the thermoplastic binder resin or those which are obtained by penetrating portions of the fine voids in at least the surface side of the wood pieces from which the contained water is evaporated with a thermoplastic binder resin.

Further, in a point that the wood pieces have a three dimensional shape in which a plurality of fine voids remain in three directions at right angles to one another, the wood pieces are distinguished from wood powders scarcely having fine voids or sliced thin pieces of wood which scarcely have fine voids in one direction among three directions at right angles to one another. The fine voids of the wood pieces mean mainly cell voids and may include conduit voids and capillary tube voids.

In the case wood wastes are crushed, generally wood pieces and wood powders with different sized are contained. Accordingly, although a plurality of wood pieces may be adjusted to have an even size, in order to omit selection process, a plurality of wood pieces with different sizes are better to be used as they are.

Further, provided no adverse effect is caused on the bonding of the wood pieces and the binder resin, wood powders, sliced flakes of wood materials, and/or various kinds of fibers, e.g., plant fibers, may be dispersed in the spaces among a plurality of wood pieces.

Since high bonding strength can be guaranteed between the binder resin and the wood pieces, the amount of the wood pieces may be optional in relation to the amount of the binder resin, however practically, the amount by volume of the wood pieces can be set in a range from 0.5 to 5 times as much as that of the binder resin. In the case a biodegradable plastic is used as the binder resin, in consideration of the characteristics of the biodegradable plastic, it is confirmed to be preferable that the amount of the wood pieces is controlled in a range from 0.5 to 2 times as much as that of the binder resin and it may be of course 2 or more times as much.

Further, if the hydrated metal compound is used for a raw material of the composite material, the resin composite formed product is provided with a hardly flammable property or non-flammability by the hydrated metal compound. The hydrated metal compound may be aluminum hydroxide and magnesium hydroxide. They are supposed to provide hardly flammable property or non-flammability by separation and evaporation of water from these compounds by heating.

The amount of the hydrated metal compound should be proper to provide the hardly flammable property or non-flammability to the resin composite formed product. Practically it is 30% by weight or higher, preferably 50% by weight or higher, and more preferably 70% by weight or higher.

In the case of aluminum hydroxide and magnesium hydroxide, it is required to prevent water from separation at the time of producing the composite material, therefore, it is desirable to select a resin which is softened and melted at a temperature at which water of aluminum hydroxide and magnesium hydroxide is not separated. The melting point of a polylactic acid type biodegradable plastic, which will be described later, is 160°C or lower, it is the optimum as the binder resin for a hardly flammable or non-flamable resin composite formed product, however a thermoplastic resin, e.g., polypropylene and polyethylene having a softening temperature or a melting temperature of 200-C or lower may be used.

A raw material of the composite material may be mixed with a hardly flammable or non-flammable aid, e.g., a phosphoric acid ester and an antimony compound.

Further, as the binder resin may be employed polypropylene, polyethylene, poly(vinyl chloride), and other thermoplastic resins. Resin beads foaming by heating or pressurizing may be added to the binder resin to an extent that the strength of the composite material is not decreased. In this case, foaming is caused partially in the binder resin composing the resin composite formed product to make the resin composite formed product lightweight.

A biodegradable plastic may be also used as the binder resin. As the biodegradable plastic are used polylactic acid type biodegradable plastics, aliphatic polyester type biodegradable plastics, and other conventionally known biodegradable plastics which are softened and melted by heating.

Particularly, in the case of a polylactic acid type biodegradable plastic, since the viscoelasticity is increased by softening with heat, it is practically difficult to carry out processing by a heated roller, however in the case of the invention, since the softened polylactic acid type biodegradable plastic is mixed with the raw material of the composite material, e.g., wood pieces and the hydrated metal compound, the viscoelasticity of the biodegradable plastic is decreased and it is made possible to carry out processing to form an optional shape by a roller or a metal mold.

Moreover, it is expected that microorganism is propagated in the fine voids of the wood pieces and promoted biodegradation in the case the wood pieces are added to the raw material of the composite material. In the case of using the polylactic acid type biodegradable plastic, the biodegradation is slow and this is one of obstacles for practical applications of the biodegradable plastic, however biodegradation can be promoted by the microorganism propagated in the fine voids of the wood pieces and practical application of the polylactic acid biodegradable plastic is highly expected. Further, the polylactic acid type biodegradable plastic is known to be insufficient in heat resistance and impact resistance, however if the polylactic acid biodegradable plastic is mixed with the wood pieces, it is expected that the heat resistance and impact resistance can be improved.

The wood pieces may be those obtained new wood materials, however in terms of advantageous use of wood resources, those derived from wood wastes are preferable to be used. Further, a new resin may be used as the binder resin, in terms of the advantageous use of resources, those derived from waste plastics are preferable to be used.

The raw material of the composite material, e.g.. wood pieces and the hydrated metal compound, is kneaded with the binder resin and the mixture may be kneaded using a kneader, or stirred and simultaneously extruded by a uniaxial or biaxial extruder, or kneaded using a kneader and thereafter conveyed to a uniaxial or biaxial extruder and further stirred to well knead the raw material and the binder resin.

In the case of the composite material containing the wood pieces bonded with the binder resin, it is required to pressurize the kneaded mixture at a strong pressure. Therefore, the kneaded mixture is injected to, for example, a molding mold opened in one face and pressurized at a strong pressure by a pressurizing plate from the opened face in one direction and from a point that the pressure higher than the molding pressure can be applied, the method is distinguished form a conventional molding.

Further, the kneaded mixture may be extruded from a kneader or an extruder (or conveyed from a kneader to an extruder and then extruded) and successively pressurized at a strong pressure by a roller or pressurized vertically and transversely by a vertical roller and a transverse roller (or pressurized at a strong pressure using mold parts in both sides of a transverse roller in place of a vertical roller by pressing the kneaded mixture to the mold parts in the side faces by strong pressure of the vertical roller).

The molding mold and the pressurizing plate may be cooled with water, so that the kneaded mixture can be cooled while being pressurized at a strong pressure. However, in the case of pressurizing by a roller, the same method cannot be employed as that in the case of using the molding mold and the pressurizing plate. Therefore, in the case of pressurizing by a roller, a method involving cooling after forcible pressure application may be employed to achieve the same result.

One characteristic of the invention is that the resin composite formed product with a plate-like or product shape is produced by crushing the composite material, arranging the crushed fragments, and heating and pressurizing the arranged crushed fragments. Accordingly, in the case the raw material of the composite material is wood pieces, the wood pieces may be obtained by pressurizing at a proper pressure to an extent that at least portions of the fine voids in the surface side of the wood pieces are penetrated with the thermoplastic binder resin.

The water contained in the wood pieces may be evaporated by heating with another heat source before kneading or the water contained in the wood pieces may be evaporated by heating the wood pieces with the heat of the binder resin at the time of kneading a plurality of wood pieces with the binder resin that is melted. In such a manner, with no need of an exclusive drying step of the wood pieces, the production process can be simplified.

In the case of recycling a used composite material, the recovered composite material is crushed into a proper size for leaving the three dimensional shape of the wood pieces, for example, a size having one side length of 5 mm to 20 mm and the binder resin is softened or melted by a proper heat source and if necessary being mixed with a binder resin, the crushed fragments are used entirely or partially as the raw material for the composite material.

In the case the used composite material is recycled as a new composite material, the ratio of the raw material and the binder resin is required to be a proper ratio.

In the case the surface resin layer is formed on the resin composite formed product, the layer may be formed by layering a softened or melted synthetic resin material on the surface of the resin composite formed product or laminating a film, a sheet, or a plate made of a synthetic resin. The surface resin layer of the resin composite formed product may be formed on the entire part of the outer surface or on portions of the outer surface, for example, on an upper face or a down face of the plate-like resin composite formed product.

The resin composite formed product may be pressure formed into a prescribed product shape after the surface resin layer is formed, or after lamination of a film, a sheet, or a plate made of a synthetic resin on the surface of the resin composite formed product or simultaneously with layering of a softened or melted synthetic resin material, the resin composite formed product may be formed into the prescribed product shape. For forming the resin composite formed product, a mold or a roller may be used and extrusion molding, bending molding, vacuum molding, pneumatic molding, and match mold molding may be employed.

The film, sheet, or plate made of a synthetic resin may be stuck to the resin composite formed product by an adhesive and the binder resin of the resin composite formed product and the synthetic resin material of the surface resin layer may be bonded each other based on the affinity.

### BRIEF DESCRIPTIONS OF THE DRAWINGS

Fig. 1 is a drawing schematically showing a resin composite formed product production method of the invention;
Fig. 2 is a cross-sectional view of a resin composite formed product obtained by the invention ;
Fig. 3 is a drawing schematically showing a second embodiment of the invention:
Fig. 4 is a drawing showing a modified second embodiment of the invention :
Fig. 5 is a drawing schematically showing a third embodiment of the invention ;
Fig. 6 is a drawing showing the process of molding by a mold in a fourth embodiment of the invention, and
Fig. 7 is a drawing schematically showing a fifth embodiment of the invention.

### DESCRIPTION OF THE PREFERREED EMBODIMENTS

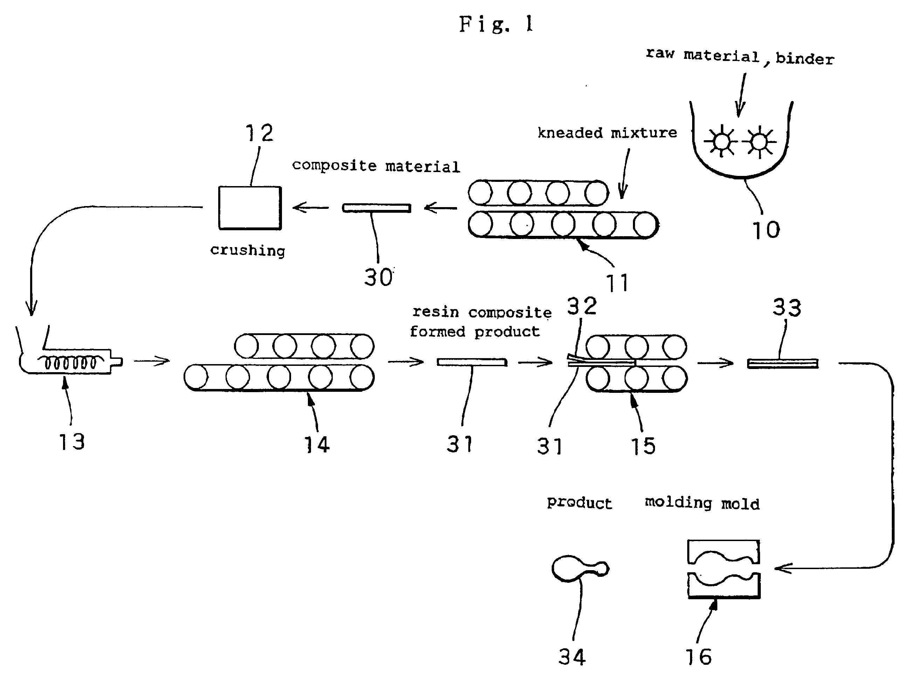

Hereinafter, the invention will be described in detail with reference to drawings of practical examples of the invention. Fig. 1 shows a preferable embodiment of a method for manufacturing a resin composite formed product according to the present invention and it shows Example for which wood pieces are used as a raw material of a composite material. In the case of manufacturing the exemplified resin composite formed product, for example, wood wastes or lumber from thinning is crushed by a crusher to obtain a material that contains a large amount of wood pieces and a small amount of wood powder (if necessary a small amount of sliced thin pieces of wood or plant fibers). Further, a binder resin derived from, for example, a waste plastic, e.g., polypropylene or polyethylene, is crushed into chips with proper sizes by a crusher. One or more kinds or these materials may be used or a polylactic acid type biodegradable plastic may be used as the binder resin.

A heating heater of a kneader 10 is operated to increase the melting temperature of the binder resin in the inside of the kneader 10 to a range from 100 °C to 300°C and the chips of the crushed binder resin are loaded to the kneader 10 and melted while being stirred. The loading of the chips of the binder resin may be carried out once or separately a plurality of times. In the case heat is generated by stirring the melted resin by rotation of stirring blades during the melting, heating temperature by the heating heater may be slightly lower than the melting temperature.

When the binder resin is sufficiently melted, the obtained wood pieces and wood powder are added to the kneader 10 once or separately a plurality of times and the resulting mixture is so sufficiently kneaded as to coat the wood pieces and wood powder with the melted binder resin. If a large amount of the wood pieces and wood powder are added once, the temperature of the melted resin is possibly lowered and therefore, the wood pieces and wood powder may be previously heated to a proper temperature by a heating heater before loading them to the kneader 10. In this case, the contained water is evaporated to a certain extent, the kneading time by the kneader 10 can be shortened.

Further, if the binder resin is heated for a long time while being in the melted state, the intrinsic physical properties of the resin may be sometimes deteriorated and therefore, it is preferable to complete the kneading within a short time after sufficient melting. According to the results of experiments carried out by the inventors of the invention, it is made clear that the time from melting to completing the kneading is preferably about 5 minutes to 30 minutes, however it differs in accordance with the temperature of the binder resin and the drying state of the wood pieces and the optimum time is preferable to be measured based on experiments or the like.

Further, since the wood pieces and wood powder are heated at a high temperature, for example 100°C to 300°C, of the melted resin and the water contained in the wood pieces and wood powder is evaporated and released from an aperture of the kneader 10, the water content of the wood pieces and wood powder is considerably decreased. In this connection, if the kneader 10 is a closed type, the kneader has to be opened intermittently at constant intervals to release the steam.

When the wood pieces and wood powder are kneaded sufficiently with the melted binder resin, the kneaded mixture is supplied to a roller type press 11 and fed at a prescribed high pressurizing pressure and kept in the pressurized state at a high pressure to cure the binder resin. The roller type press 11 comprises upper side and lower side roller rows and an endless belt laid over the roller rows. The rollers in the terminal end sides are better to be cooled with water to cool the kneaded mixture in the state that the pressure is being applied. In place of cooling with water, air may be blown for cooling.

Further, in the case the binder resin is a biodegradable plastic, if the resin is heated and softened, the viscosity is increased to stick the resin to the binder, however if the resin is kneaded with the wood pieces as described above, the viscoelasticity is lowered to make processing by rollers possible.

The feeding speed of the kneaded mixture is proper to sufficiently solidify the kneaded mixture when the mixture comes out of the roller rows. The pressurizing pressure by the upper and lower roller rows is adjusted to apply a plane pressure of 19.6×10⁵ Pa (20 kgf/cm²) and the plane pressure may be properly selected in a range from 19.6×10⁵ Pa (20 kgf/cm²) to 58,8×10⁵ Pa (60 kgf/cm²) based on the uses of the composite material and materials and if necessary, a higher plane pressure may be applied.

When the kneaded mixture is cured in such a manner, a composite wood material (a composite material) 30 in which a plurality of wood pieces and the binder resin are mutually firmly bonded can be obtained. The pressurizing pressure in the roller type press 11 may be lowered or the feeding speed may be made fast to obtain a composite material 30, which is a semi-composite wood material having a sufficient bonding strength between the wood pieces and the binder resin but not completely high enough to give the composite material.

The obtained composite material 30 is crushed into fragments with a proper size, for example, a size having 3 mm to 20 mm length in one side by a crusher 12. The size of the crushed fragments is not particularly limited if the composite material 30 can be sufficiently softened or melted in the successive steps to form the material into a plate with a high size precision.

Thereafter, the crushed fragments of the composite material 30 are loaded to, for example, a biaxial (or uniaxial) extruder 13 (or another conventionally known heating apparatus may be used) and the crushed fragments of the composite material 30 are pushed among screws and against the cylinder inner face of the extruder 13 to soften them by friction heat and on the other hand, a roller press 14 is heated and the crushed fragments of the composite material 30 are extruded and arranged in the roller type press 14 and pressurized by the roller press 14 to produce a plate-like resin composite formed product 31.

The plate-like resin composite formed product 31 is pressed to a thickness equivalent to the value calculated by subtracting the thickness of the surface resin layer from the thickness of the product and since the raw material in which the wood prices and the binder resin are already bonded at a high strength is used, press can be carried out by pressurizing at an enough pressure to give high size precision.

Next, while a film (optionally a sheet or a plate) 32 made of a resin, for example polypropylene or polyethylene is laminated on the obtained resin composite formed product 31, the resin composite formed product 31 is fed to a roller press 15 and heated to bind the film 32 on the surface of the resin composite formed product 31 to form the surface resin layer. The same operation may be repeated to form the surface resin layer on the top face, the lower face, and the side faces of the resin composite formed product 31.

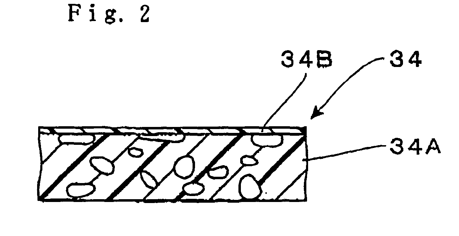

When the material 33 of a product is obtained in this manner, the material 33 is set in a mold 16 and heated and pressurized to form into a prescribed three dimensional shape and thus obtain a product 34. The product 34 has a structure comprising a composite material 34A and a resin layer 34B covering the surface of the composite material 34A as shown in Fig. 2 and when being observed from the surface, it is seemed that the entire body of the product 34 might be produced solely from a resin.

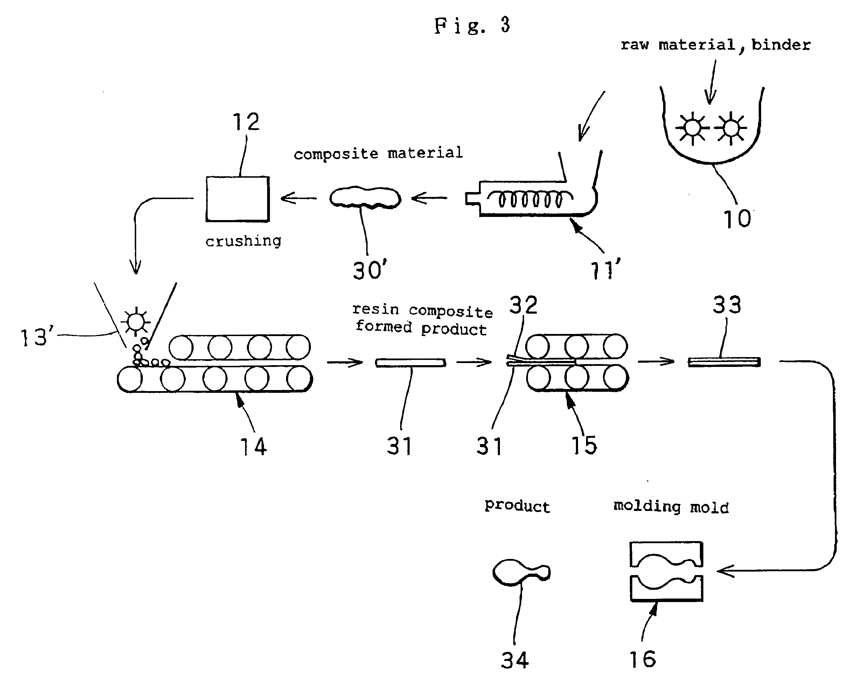

Fig. 3 shows a second embodiment and the same symbols as those in Fig. 1 show the same parts. In this embodiment, a uniaxial or biaxial extruder 11' is used in place of the roller type press 11 and a composite material 30' if produced at a pressure not so high and the material is crushed in the crushing step 12. Since a resin composite formed product 31 is produced by heating and pressurizing crushed pieces in following steps, it is not necessarily required to firmly bond the wood pieces and the binder resin in the production steps of the composite material 30' and the composite material may be semi composite wood material in which portions of the fine voids in the surface side of the wood pieces are penetrated with the binder resin.

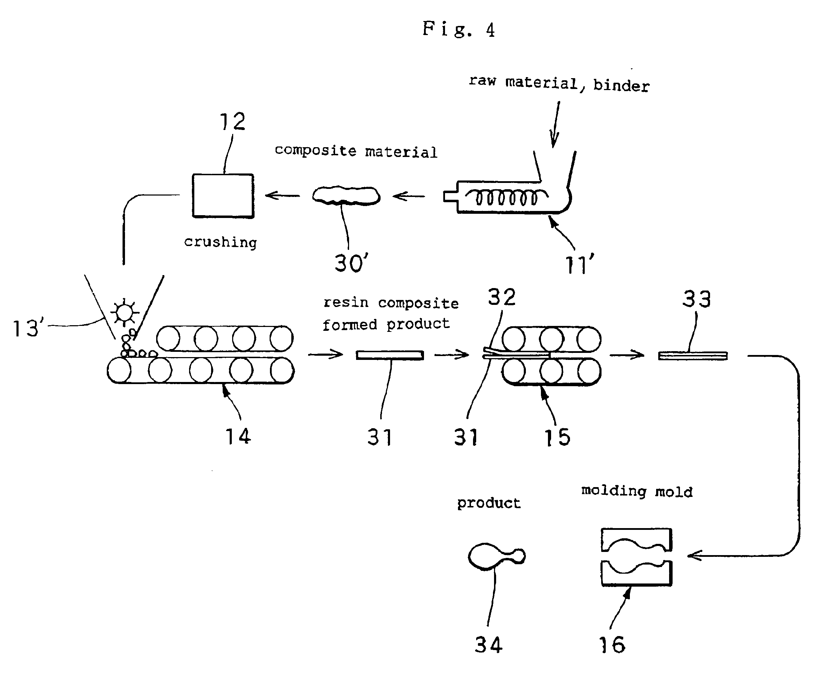

The kneader 10 is not necessarily used, and as shown in Fig. 4, the wood pieces and the binder resin may be loaded to the extruder 11' and kneaded.

Further, in this embodiment, crushed pieces of the composite material 30' may be supplied to the roller type press 14 by a feeder 13' but not by the extruder 13 as they are being crushed pieces, arranged on a plane, and heated and pressurized to obtain a plate-like resin composite formed product 31.

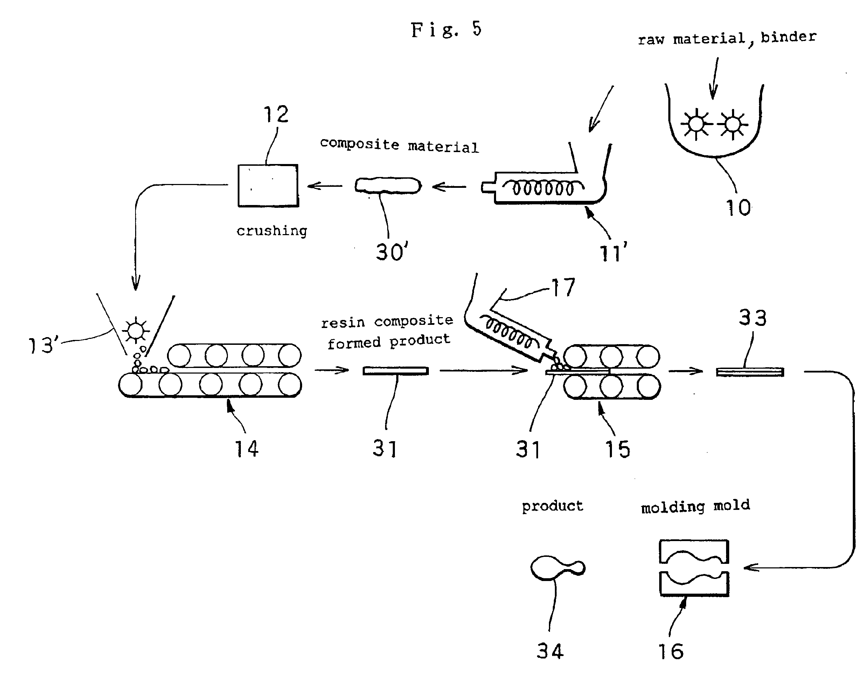

Fig. 5 shows the third embodiment and the same symbols as those in Fig. 3 show the same parts in the drawing. In this embodiment, at the time of producing the raw material 33 of the product by the roller type press 15, a softened or a melted resin is extruded by an extruder 17 on plate-like resin composite formed product 31 to form the surface resin layer.

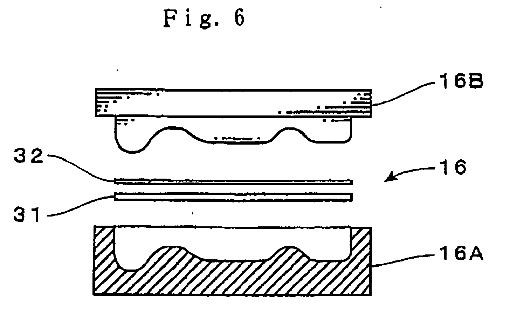

Fig. 6 shows the fourth embodiment and the same symbols as those in Fig. 1 to Fig. 4 show the same parts in the drawing. In this embodiment, a mold 16 is used in place of the roller type press 15 for pressing the raw material 33 of a product and a resin composite formed product 31 and a film 32 made of a resin are set while being layered between a lower mold.16A and an upper mold 16B and heated and pressurized to bond the resin composite formed product 31 and the film 32 made of a resin, form the resin layer on the surface of resin composite formed product 31, and at the same time form them into a product shape.

In the fourth embodiment, the substrate 31 and the film 32 made of a resin are set on the lower mold 16A while being layered, the crushed pieces of the composite material 30 or 30' may be arranged on the molding face of the lower mold 16A (the face with the product shape) and pressurized by the upper mold 16B to produce a resin composite formed product with a product shape and thereafter, the film 32 made of a resin may be laminated and pressurized by the upper mold 16B to form a surface resin layer. Further, the crushed pieces of the composite material 30 or 30' may be arranged on the molding face (the face with the product shape) of the lower mold 16A and the film 32 made of a resin may be laminated thereon and heated and pressurized by the upper die 16B to form the resin composite formed product with a product shape and the surface resin layer.

Further, the pressurizing at a strong pressure using the mold may be employed in place of pressing using the roller type press 11 for producing the composite material 30 or 30' and forcible pressurization by passing the materials through multi-step rollers and cooling may be repeated to cure the binder resin and produce the composite material 30 or 30'.

Further, in the above-mentioned embodiment, the composite material 30 or 30' is produced and then crushed to produce the resin composite formed product, however discarded composite wood and resin composite formed products may be recovered and the composite wood may be extracted to use it as a raw material for producing the resin composite formed product.

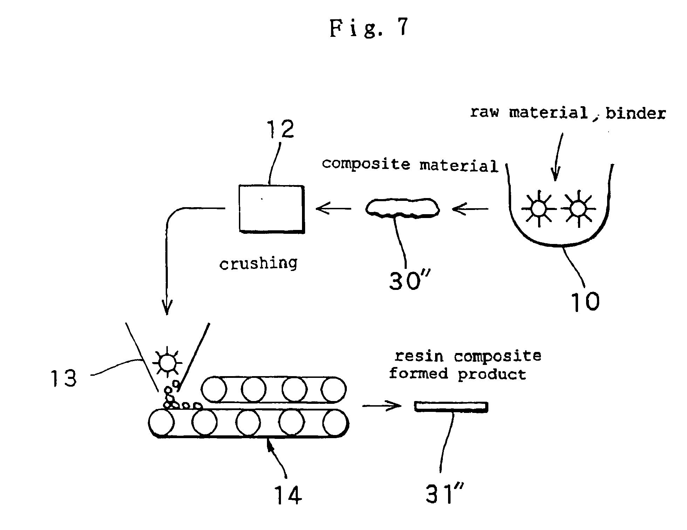

Fig. 7 shows the fifth embodiment and it is an example using a hydrated metal compound as a raw material for the composite material.

In the case the resin composite formed product of this embodiment is produced, a hydrated metal compound, for example, aluminum hydroxide or magnesium hydroxide is made ready. The hydrated metal compound having an average outer diameter of 10 µm to 35 µm may be used. On the other hand, a polylactic acid type biodegradable plastic in a powder state with a proper size, for example. 150µm to 250µm is made ready as a binder resin.

A heating heater of a kneader 10 is operated and the inside of the kneader 10 is heated t a softening temperature of the binder resin, for example, 100° C to 150° C and the binder resin is fed to the kneader 10 and softened while being stirred. The binder resin may be fed once or separated a plurality of times.

When the binder resin is sufficiently softened, the hydrated metal compound made ready is fed to the kneader 10 once or separately a plurality of times and the softened binder resin and the hydrated metal compound are sufficiently kneaded. If the binder resin is heated for a long time, the intrinsic physical characteristics of the resin may be deteriorated in some cased and therefore, kneading is preferable to be completed within a short time.

When the hydrated metal compound and the binder resin are kneaded sufficiently, the kneaded mixture is taken out of the kneader 10 to obtain a composite material 30". The composite material 30" is crushed by a crusher 12 into a proper size, for example, 3 mm to 20 mm in one side. The size of the crushed fragments is not particularly limited if the size is proper to sufficiently soften or melt the composite material 301 and process the material into a plate with a high size precision in the successive steps.

The crushed fragments of the composite material 301 are then fed to a feeder 13 and crushed fragment of the composite material 30" are arranged on the roller type press 14 and heated to a proper temperature, for example about 160°C. by the roller type press 14 to soften the binder resin of the crushed fragments and pressurize the crushed fragments to obtain a plate-like resin composite formed product 31".

The obtained resin composite formed product 31" is provided with a hardly flammable property or non-flammability and may be used for an automotive interior material or a construction interior material having a hardly flammable property or non-flammability.

When a resin composite formed product containing 70% by weight of aluminum hydroxide and 30% by weight of a polylactic acid type biodegradable plastic was produced by the method according to this embodiment, a resin composite plate with an extremely smooth surface was obtained and the thickness could be adjusted optionally to be 1.5 mm or thickness. The resin composite plate was just like a polished stone in terms of the hardness and the surface smoothness.

Further, in the case an ethylene-vinyl acetate (EVA) was used as a binder resin in place of the polylactic acid type biodegradable plastic, a resin composite plate containing 80% by weight of aluminum hydroxide and 20% by weight of EVA, having an extremely smooth surface was produced and was obtained and the thickness could be adjusted optionally to be 1.5 mm or thickness.

In the connection, the production of the resin composite formed product using the hydrated metal compound is not limited to the method shown in Fig. 7 and excluding the steps of the pressurizing at a high pressure at the time of the composite material production, the methods shown in the first to the fourth embodiments can be employed in the same manner.

## Claims

1. A method for manufacturing a resin composite formed product in a plate-like or prescribed three-dimensional shape by using a composite material obtained by bonding a particulate raw material with a binder resin, crushing the composite material, arranging the crushed fragments of the composite material on a plane or a prescribed three-dimensional face, softening or melting the binder resin under pressurizing condition, and curing or otherwise hardening the binder resin.

2. The method for manufacturing a resin composite formed product according to claim 1, wherein the binder resin is thermoplastic resin.

3. The method for manufacturing a resin composite formed product according to claim 1 or 2, wherein the binder resin is a biodegradable plastic.

4. The method of any preceding claim, wherein said raw material is one or more of filler-like, powder-like, granular, flaky, or bulky raw materials.

5. The method for manufacturing a resin composite formed product according to any preceding claim, wherein the raw material of the composite material is wood pieces and the composite material is obtained by binding the wood pieces and the binder resin by evaporating the water contained in the wood pieces and at the same time penetrating most or portions of fine voids in at least surface side of the wood pieces with a thermoplastic binder resin and curing or otherwise hardening the binder resin.

6. The method for manufacturing a resin composite formed product according to any of claims 1-4, wherein the raw material of the composite material comprises a hydrated metal compound and the resin composite formed product is provided with hardly flammable property or non-flammability by the hydrated metal compound.

7. The method for manufacturing a resin composite formed product according to claim 6, wherein the hydrated metal compound is aluminium hydroxide and/or magnesium hydroxide.

8. The method for manufacturing a resin composite formed product according to any preceding claim, wherein the raw material of the composite material is mixed with a hardly flammable or non-flammable aid.

9. The method for manufacturing a resin composite formed product according to claim 8, wherein the aid is a phosphoric acid ester or an antimony compound.
